(19) Europäisches Patentamt / European Patent Office / Office européen des brevets

(11) **EP 4 160 493 B1**

(12) **EUROPEAN PATENT SPECIFICATION**

(45) Date of publication and mention
of the grant of the patent:
**25.06.2025 Bulletin 2025/26**

(21) Application number: **21791597.4**

(22) Date of filing: **27.05.2021**

(51) International Patent Classification (IPC):
**G06Q 10/04** *(2023.01)*    **G08B 21/16** *(2006.01)*

(52) Cooperative Patent Classification (CPC):
**G06Q 10/04; G08B 21/16**

(86) International application number:
**PCT/CN2021/096417**

(87) International publication number:
**WO 2021/213546 (28.10.2021 Gazette 2021/43)**

(54) **COAL GAS CONCENTRATION PREDICTION METHOD BASED ON COLLABORATIVE FILTERING, AND DEVICE AND REFRIGERATOR**

VERFAHREN ZUR VORHERSAGE VON KOHLENGASKONZENTRATIONEN BASIEREND AUF KOLLABORATIVEM FILTERN SOWIE VORRICHTUNG UND KÜHLSCHRANK

PROCÉDÉ DE PRÉVISION DE CONCENTRATION DE GAZ DE HOUILLE BASÉ SUR LE FILTRAGE COLLABORATIF, AINSI QUE DISPOSITIF ET RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2020 CN 202010475559**

(43) Date of publication of application:
**05.04.2023 Bulletin 2023/14**

(73) Proprietors:
• **Qingdao Haier Refrigerator Co., Ltd**
**Qingdao, Shandong 266101 (CN)**
• **Haier Smart Home Co., Ltd.**
**Qingdao, Shandong 266101 (CN)**

(72) Inventors:
• **SUN, Xingkai**
**Qingdao, Shandong 266101 (CN)**
• **GAO, Hongbo**
**Qingdao, Shandong 266101 (CN)**
• **KONG, Linglei**
**Qingdao, Shandong 266101 (CN)**

(74) Representative: **Winter, Brandl - Partnerschaft mbB**
**Alois-Steinecker-Straße 22**
**85354 Freising (DE)**

(56) References cited:
CN-A- 102 495 864    CN-A- 110 008 405
CN-A- 111 080 976    CN-B- 102 184 460
US-B1- 10 007 946    US-B2- 8 412 726

## Description

### TECHNICAL FIELD

The present invention relates to the field of household appliance control, in particular to a method and device for predicting a gas concentration based on collaborative filtering, and a refrigerator.

### BACKGROUND

In daily life, gas provides great convenience for people's life. However, the people's life and property safety are meanwhile greatly endangered by gas leakage.

Nowadays, with the increasing development of science and technology, various recommending or predicting algorithms are emerging, and the most common algorithm is collaborative filtering. As a recommending system technology, the collaborative filtering has been increasingly adopted in various websites and e-commerce systems with the rapid development of Internet. The collaborative filtering may be subdivided into the following three types: user-based collaborative filtering, item-based collaborative filtering and model-based collaborative filtering. The basic idea of the user-based collaborative filtering is to calculate a user group having similar interests to a user, and then make recommendations after finding the items that the user does not have from the user group with similar interests. The item-based collaborative filtering has a similar principle. The model-based collaborative filtering adopts a machine learning method, and makes recommendations via a recommendation model trained based on the historical data.

CN102184460B for example proposes a GEPCF (Gas Emission Prediction using Collaborative Filtering) method based on collaborative filtration for predicting gas outflow from coal mines, which applies collaborative filtration technology to the research in the field of coal mines, and with the method of interest prediction, the gas outflow from mines can be predicted relatively accurately to improve the safety of coal mine production.

The problem to be desired is to solve is how to predict the gas leakage via the collaborative filtering to thereby reduce the loss caused by the gas leakage.

### SUMMARY

Objects of the present invention are to provide a method and device for predicting a gas concentration based on collaborative filtering, and a refrigerator.

In order to achieve one of the aforesaid objects, an embodiment of the present invention provides a method for predicting a gas concentration based on collaborative filtering. The method comprises:

  acquiring gas-related scenario information of a plurality of historical users having a gas leakage;
  acquiring scenario information of a current user, and calculating a similarity in the scenario information between the plurality of historical users and the current user via a collaborative filtering algorithm;
  acquiring a first user set by selecting the historical users whose similarity exceeds a threshold, and acquiring a gas leakage predicting equation for the current user based on gas leakage data of the historical users in the first user set;
  predicting a gas leakage of the current user via the gas leakage predicting equation;
  the "predicting the gas leakage of the current user via the gas leakage predicting equation" specifically comprises:

    acquiring a gas concentration Ct in a kitchen of the current user via a gas sensor;
    calculating warning time t1 for the gas concentration to reach a warning value Ct1 via the gas leakage predicting equation when the gas concentration Ct in the kitchen is detected to reach a predetermined lower limit value Ct0; and
    sending the warning time t1 to the user.

As a further improvement of an embodiment of the present invention, calculating the similarity in the scenario information between two users via the collaborative filtering algorithm specifically comprises:

  calculating a similarity w_uv based on scenario information sets N(u) and N(v) of two users u and v:

$$w_{uv} = \frac{\sum_{i \in N(u) \cap N(v)} \frac{1}{\log(1+|N(i)|)}}{\sqrt{|N(u)||N(v)|}}$$

wherein N(i) refers to a user set whose ith data are identical among the scenario information of the plurality of users.

As a further improvement of an embodiment of the present invention, the scenario information of each user comprises a region L, a gas pipeline material P, a kitchen volume V, and gas installation time T.

As a further improvement of an embodiment of the present invention, the "acquiring the gas leakage predicting equation for the current user based on the gas leakage data of the historical users in the first user set" specifically comprises:

performing a linear regression on the gas leakage data of each historical user in the first user set, and acquiring a linear regression equation for each historical user;

dividing the first user set into a plurality of second user sets according to types of the linear regression equations; and

selecting the linear regression equation of the historical user who is in the second user set having a greatest number and has a greatest similarity to the current user as the gas leakage predicting equation for the current user.

As a further improvement of an embodiment of the present invention, the "sending the warning time t1 to the user" specifically comprises:

calculating a user to be alerted preferentially based on relevant information of the plurality of users and different weights of different relevant information, wherein the relevant information comprises the user's age, role, physical fitness and a distance from the kitchen; and

sending the warning time t1 to the user to be alerted preferentially.

As a further improvement of an embodiment of the present invention, the method further comprises:

sending a signal to a gas emergency shut-off device to turn off a gas main switch when the gas concentration Ct is detected to reach the warning value Ct1, and sending an activation signal to a ventilation device of the kitchen; and

calculating a user to be alerted preferentially based on relevant information of the plurality of users and different weights of different relevant information, and sending an alert message to the user to be alerted preferentially.

As a further improvement of an embodiment of the present invention, the method further comprises:

sending an alarm to the user to be alerted preferentially if the gas concentration of the user is detected to continue rising after the signal is sent to the gas emergency shut-off device to turn off the gas main switch.

In order to achieve one of the aforesaid objects of the present invention, an embodiment of the present invention provides an electronic device, which comprises a memory and a processor, the memory stores a computer program operatable on the processor, and the processor executes the computer program to implement the steps in the aforesaid method for predicting the gas concentrations based on collaborative filtering.

In order to achieve one of the aforesaid objects of the present invention, an embodiment of the present invention provides a refrigerator, wherein the refrigerator comprises the aforesaid electronic device.

Compared with the prior art, in the method for predicting the gas concentration according to the present invention, the historical user having similar gas leakage scenario information as the current user is found via the collaborative filtering algorithm, and then linear fitting is performed on the gas leakage data of the historical user to acquire linear regression equations, allowing to predict the gas leakage data of the current user via the linear regression equations.

**BRIEF DESCRIPTION OF THE DRAWINGS**

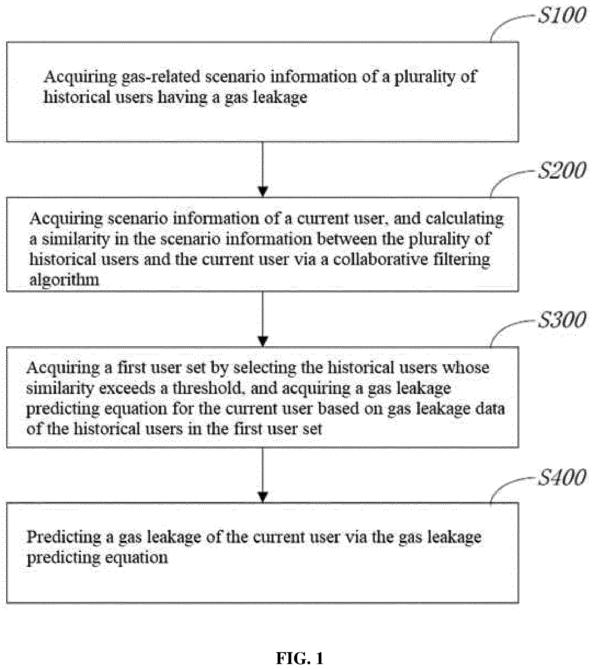

FIG. 1 is a schematic flowchart of a method for predicting a gas concentration based on collaborative filtering according to the present invention.

**DETAILED DESCRIPTION**

The present invention will be described hereinafter in detail with reference to the specific embodiments shown in the drawings. However, the embodiments are not intended to limit the present invention, and the structures, methods, or functional changes made by those of ordinary skill in the art according to the embodiments are all included in the protection scope of the present invention.

As shown in FIG. 1, the present invention provides a method for predicting a gas concentration based on collaborative filtering. The method comprises the following steps.

In S100, gas-related scenario information of a plurality of historical users having a gas leakage is acquired.

The scenario information of historical users who have had the gas leakage may be collected via Internet, and the scenario information is related to gas and preferably comprises a region L where the user had a gas leakage, a gas pipeline material P, a kitchen volume V, gas installation time T, and the like.

In S200, the scenario information of a current user is acquired, and a similarity in scenario information between the plurality of historical users and the current user is calculated via a collaborative filtering algorithm

The similarity w_uv is calculated via scenario information sets N(u) and N(v) of two users u and v:

$$w_{uv} = \frac{\sum_{i \in N(u) \cap N(v)} \frac{1}{\log(1+|N(i)|)}}{\sqrt{|N(u)||N(v)|}}$$

where N(i) refers to a user set whose $i^{th}$ data are identical among the scenario information of the plurality of users. The more the users having the identical data, the greater the N(i) is, and the less contribution the data made to the similarity between the two users.

In a specific embodiment, the scenario information of each user comprises a region L where the user has the gas leakage, the gas pipeline material P, the kitchen volume V, and the gas installation time T. Thus, the scenario information sets N(u) and N(v) of the two users u and v are respectively:

$$N(u) = \{L_u, P_u, V_u, T_u\}$$

$$N(v) = \{L_v, P_v, V_v, T_v\}$$

The users u and v have the same region and gas pipeline material, which means that L_u=L_v=A and P_u=P_v=B, but have different kitchen volume and the gas installation time. In addition, among the 100 users as sampled, there are 19 users in the region A, and 5 users having the gas pipeline material B. Thus, according to the similarity calculating formula, w_uv is calculated as:

$$w_{uv} = \frac{\sum_{i \in N(u) \cap N(v)} \frac{1}{\log(1+|N(i)|)}}{\sqrt{|N(u)||N(v)|}} = \frac{\frac{1}{\log 20} + \frac{1}{\log 6}}{4} = 0.513$$

Then, the similarity in scenario information between the plurality of historical users and the current user is calculated according to the aforesaid manner.

In S300, a first user set is acquired by selecting the historical users whose similarity exceeds a threshold, and a gas leakage predicting equation for the current user is acquired based on gas leakage data of the historical users in the first user set.

Assuming that the similarity threshold is 75%, all historical users whose similarity with the current user exceeds 75% are selected and put into the first user set. Further, the "acquiring the gas leakage predicting equation for the current user based on the gas leakage data of the historical users in the first user set" specifically comprises the following steps.

In S310, a linear regression is performed on the gas leakage data of each historical user in the first user set, and a linear regression equation is acquired for each historical user.

The data of gas concentration increasing over the time of leakage may be acquired for each historical user, and then the corresponding linear regression equations may be acquired by performing the linear regression on the data. The linear regression equations comprise a regression straight-line equation and a regression curve equation.

In S320, the first user set is divided into a plurality of second user sets according to types of the linear regression equations.

By analyzing the historical data, it is found that most of the gas concentration is increased with the leakage time linearly and a few curvilinearly. Therefore, the first user set is divided into a plurality of second user sets according to types of the linear regression equations. For example, the first user set may be divided into two second user sets C and D according to types of the linear regression equations. The type of linear regression equation for the second user set C is a linear regression equation, and the type of linear regression equation for the second user set D is a regression curve equation.

In S330, the linear regression equation of the historical user who is in the second user set having a greatest number and has a greatest similarity to the current user as the gas leakage predicting equation for the current user.

Firstly, the second user set having the greatest number is selected, and the second user set C may, for example, be selected if it has the greatest number.

Then, the linear regression equation of the historical user who is in this second user set and has a greatest similarity to the current user is taken as the gas leakage predicting equation for the current user. For example, the type of the second user set C is the linear regression equation, and the historical user having the greatest similarity to the current user in the second user set C is E, and the linear regression equation of the gas leakage for the historical user E is Ct=w*t+b. Thus, Ct=w*t+b is selected as the gas leakage predicting equation for the current user.

In S400, a gas leakage of the current user is predicted via the gas leakage predicting equation.

The step S400 specifically comprises the following sub-steps.

In S410, a gas concentration Ct in a kitchen of the current user is acquired.

The gas concentration Ct in the kitchen of the current user may be detected via a sensor.

In S420, warning time t1 for the gas concentration to reach a warning value Ct1 is calculated via the gas leakage predicting equation when the gas concentration Ct in the kitchen is detected to reach a predetermined lower limit value Ct0.

The historical gas concentration data in normal periods and gas leaking periods is acquired, and the predetermined lower limit value Ct0 of the gas concentration is determined. The Ct0 has no effect on the human body and indicates that the gas is beyond a normal range or the gas has leaked. The warning value Ct1 is a gas concentration value that may cause slight harm to the human body.

The warning time t1 for the gas concentration to reach the warning value Ct1 is calculated via the gas leakage predicting equation. Specifically, assuming that the gas leakage predicting equation is Ct=w*t+b, the warning time t1 is calculated via the linear regression equation and time t0 for reaching the lower limit value Ct0:

$$t1=(Ct1-Ct0)/w+t0.$$

It should be noted that, if the gas leakage predicting equation is a regression curve equation, after detecting that the gas concentration Ct in the kitchen reaches the predetermined lower limit value Ct0, data for several time nodes may be acquired to calculate the warning time t1.

In S430, the warning time t1 is sent to the user.

Then, the warning time t1 is sent to the user to remind the user that the gas concentration in the kitchen will reach the warning value Ct1 at a moment t1. The user may make preparation based on the information.

In a preferred embodiment, the "sending the warning time t1 to the user" specifically comprises: calculating a user to be alerted preferentially based on relevant information of a plurality of users and different weights of different relevant information, and sending the warning time t1 to the user to be alerted preferentially.

Furthermore, the "calculating the user to be alerted preferentially based on relevant information of the plurality of users and different weights for different relevant information" comprises: calculating a total weight for each user based on the relevant information of each user, the relevant information comprising the user's age, role, physical fitness and a distance from the kitchen; and taking users ranked at top N in the total weight as the users to be alerted preferentially.

Further, the "calculating the total weight for each user based on the relevant information of each user" specifically comprises:

> acquiring each user's actual age $a$, role $r$, physical fitness $b$ and distance $l$ from the kitchen; and
> selecting a corresponding age weight Wa based on the age $a$, where if $a$ is less than and equal to 30, the larger the $a$, the larger the weight Wa; otherwise, the smaller the $a$, the smaller the Wa. It is also possible to configure a weight for each age group and select the corresponding age weight based on the age group in which a specific age falls.

Different role weights Wr are selected based on the different roles $r$, where the role weights are ranked from largest to smallest as father, mother, child, housekeeper or nanny, security guard or property management.

Different physical fitness weights Wb are selected based on the different physical fitness $b$, where the physical fitness weights are ranked from largest to smallest as fit, normal, thin, diseased, disabled.

A corresponding distance weight W1 is selected based on the distance $l$ from the kitchen, where the larger the $l$, the smaller the W1. It is also possible to segment the distance $l$, configure a weight for each segment, and select the corresponding distance weight based on the distance segment into which the specific distance $l$ falls.

The total weight W for each user is equal to a sum of the corresponding age weight Wa, role weight Wr, physical fitness weight Wb and distance weight W1 for each user, that is, W=Wa+Wr+Wb+Wl.

Furthermore, the "acquiring each user's actual age $a$, role $r$, physical fitness $b$ and distance $l$ from the kitchen" specifically comprises:

> calculating, via an age pre-inputted for each user, the age $a$ for each user based on the input time and the present time;
> acquiring the user's actual role r and physical fitness $b$ via a role and a physical fitness pre-inputted for each user; and
> acquiring the distance $l$ between the user and the kitchen via a pre-bound positioning terminal.

If the user does not receive the warning time t1 or receives but has no time to make responses, the gas concentration needs to be controlled. Thus, in a preferred embodiment, the method further comprises the following steps.

Firstly, a signal is sent to a gas emergency shut-off device to turn off a gas main switch when the gas concentration Ct is detected to reach the warning value Ct1, and an activation signal is sent to a ventilation device of the kitchen.

Turning off the gas main switch means to control the rising of gas concentration, and turning on the ventilation device means to divert the gas in the kitchen and reduce the gas concentration to prevent the gas concentration from rising and causing irreparable damages.

Then, a user to be alerted preferentially is calculated based on relevant information of a plurality of users and different weights for different relevant information, and an alert message is sent to the user to be alerted preferentially.

The alert message comprises that the gas concentration has reached the warning value Ct1 and a signal is sent to turn off the main gas switch and activate the ventilation device.

It should be noted that since the gas main switch may fail to be turned off, in order to remind the user to take measures carefully, the method further comprises:

sending an alarm to the user to be alerted preferentially if the gas concentration of the user is detected to continue rising after the signal is sent to the gas emergency shut-off device to turn off the gas main switch.

The alarm is configured to alert the user that the gas main switch has failed to be turned off and the gas concentration continues rising, and the user shall take countermeasures.

In a specific embodiment, a refrigerator system of the current user collects the scenario information of historical users who have had the gas leakage via Internet, wherein the scenario information comprises a region L where the user had the gas leakage, a gas pipeline material P, a kitchen volume V, and gas installation time T. Then, the scenario information of the current user is acquired, and the similarity in scenario information between the plurality of historical users and the current user is calculated via the collaborative filtering algorithm. The first user set is acquired by selecting the historical users whose similarity exceeds the threshold, and the linear regression is performed on the gas leakage data of the historical users in the first user set. Then, each historical user acquires a regression equation, and the historical users in the first user set are divided into a plurality of subsets according to the types of the regression equations. Afterwards, the linear regression equation of the historical user who is in the subset having the greatest number and has the greatest similarity to the current user is selected as the gas leakage predicting equation for the current user. Finally, the gas leakage of the current user is predicted via the gas leakage predicting equation.

In the method for predicting the gas concentration according to the present invention, the historical user having similar gas leakage scenario information as the current user is found via the collaborative filtering algorithm, and then linear fitting is performed on the gas leakage data of the historical users to acquire linear regression equations, allowing to predict the gas leakage data of the current user via the linear regression equations. Then, the relevant prediction information is sent to the user to prevent the gas concentration from further rising and reduce damages caused by the gas to the human body.

The present invention further provides an electronic device, which comprises a memory and a processor. The memory stores a computer program operatable on the processor. The processor, while executing the program, may implement any one step in the method for predicting the gas concentration based on collaborative filtering as described above. That is, the processor implements the steps in any technical solution of the method for predicting the gas concentration based on collaborative filtering as described above.

The present invention further provides a refrigerator that comprises the aforesaid electronic device.

It should be understood that although the present invention is described in terms of embodiments in this description, not every embodiment includes only one independent technical solution. The statement mode of the description is merely for clarity, and those skilled in the art should regard the description as a whole.

The series of detailed illustration listed above are merely for specifically illustrating the feasible embodiments of the present invention, but not intended to limit the protection scope of the present invention. The scope of the invention is defined by the appended claims.

**Claims**

1. A method for predicting a gas concentration based on collaborative filtering, comprising:

    acquiring gas-related scenario information of a plurality of historical users having a gas leakage (S100);
    acquiring scenario information of a current user, and calculating a similarity in the scenario information between the plurality of historical users and the current user via a collaborative filtering algorithm (S200);
    acquiring a first user set by selecting the historical users whose similarity exceeds a threshold, and acquiring a gas leakage predicting equation for the current user based on gas leakage data of the historical users in the first user set (S300); and

predicting a gas leakage of the current user via the gas leakage predicting equation (S400);
the "predicting the gas leakage of the current user via the gas leakage predicting equation" specifically comprises:

acquiring a gas concentration Ct in a kitchen of the current user via a gas sensor '(S410);
calculating warning time t1 for the gas concentration to reach a warning value Ct1 via the gas leakage predicting equation when the gas concentration Ct in the kitchen is detected to reach a predetermined lower limit value Ct0 (S420); and
sending the warning time t1 to the user (S430).

2. The method for predicting the gas concentration based on collaborative filtering according to claim 1, wherein calculating the similarity in the scenario information between two users via the collaborative filtering algorithm specifically comprises:

calculating a similarity w_uv according to scenario information sets N(u) and N(v) of two users u and v:

$$ W_{uv} = \frac{\sum_{i \in N(u) \cap N(v)} \frac{1}{\log(1+|N(i)|)}}{\sqrt{|N(u)||N(v)|}} $$

wherein N(i) refers to a user set whose $i^{th}$ data are identical among the scenario information of the plurality of users.

3. The method for predicting the gas concentration based on collaborative filtering according to claim 2, wherein the scenario information of each user comprises a region L, a gas pipeline material P, a kitchen volume V, and gas installation time T.

4. The method for predicting the gas concentration based on collaborative filtering according to claim 1, wherein the "acquiring the gas leakage predicting equation for the current user based on the gas leakage data of the historical users in the first user set" specifically comprises:

performing a linear regression on the gas leakage data of each historical user in the first user set, and acquiring a linear regression equation for each historical user (S310);
dividing the first user set into a plurality of second user sets according to types of the linear regression equations (S320); and
selecting the linear regression equation of the historical user who is in the second user set having a greatest number and has a greatest similarity to the current user as the gas leakage predicting equation for the current user (S330).

5. The method for predicting the gas concentration based on collaborative filtering according to claim 1, wherein the "sending the warning time t1 to the user" specifically comprises:

calculating a user to be alerted preferentially based on relevant information of the plurality of users and different weights of different relevant information, wherein the relevant information comprises the user's age, role, physical fitness and a distance from the kitchen; and
sending the warning time t1 to the user to be alerted preferentially.

6. The method for predicting the gas concentration based on collaborative filtering according to claim 1, further comprising:

sending a signal to a gas emergency shut-off device to turn off a gas main switch when the gas concentration Ct is detected to reach the warning value Ct1, and sending an activation signal to a ventilation device of the kitchen; and
calculating a user to be alerted preferentially based on relevant information of the plurality of users and different weights of different relevant information, and sending an alert message to the user to be alerted preferentially.

7. The method for predicting the gas concentration based on collaborative filtering according to claim 6, further comprising:
sending an alarm to the user to be alerted preferentially if the gas concentration of the user is detected to continue rising after the signal is sent to the gas emergency shut-off device to turn off the gas main switch.

8. An electronic device, comprising a memory and a processor, wherein the memory stores a computer program operatable on the processor, and the processor executes the computer program to implement the steps in the method for predicting the gas concentration based on collaborative filtering according to any one of claims 1 to 7.

9. A refrigerator, comprising the electronic device according to claim 8.

**Patentansprüche**

1. Verfahren zum Vorhersagen einer Gaskonzentration basierend auf kollaborativer Filterung, mit den folgenden Schritten:

Erfassen von gasbezogenen Szenarioinformationen einer Mehrzahl von historischen Benutzern, die eine Gasleckage aufweisen (S100);
Erfassen von Szenarioinformationen eines aktuellen Benutzers, und Berechnen einer Ähnlichkeit in den Szenarioinformationen zwischen der Mehrzahl von historischen Benutzern und dem aktuellen Benutzer über einen kollaborativen Filteralgorithmus (S200);
Erfassen eines ersten Benutzersatzes durch Auswählen der historischen Benutzer, deren Ähnlichkeit einen Schwellenwert überschreitet, und Erfassen einer Gasleckage-Vorhersagegleichung für den aktuellen Benutzer basierend auf Gasleckage-Daten der historischen Benutzer in dem ersten Benutzersatz (S300); und
Vorhersagen einer Gasleckage des aktuellen Benutzers über die Gasleckage-Vorhersagegleichung (S400);
wobei das "Vorhersagen der Gasleckage des aktuellen Benutzers über die Gasleckage-Vorhersagegleichung" konkret die folgenden Schritte umfasst:

Erfassen einer Gaskonzentration Ct in einer Küche des aktuellen Benutzers über einen Gassensor (S410);
Berechnen einer Warnzeit t1 für die Gaskonzentration, um einen Warnwert Ct1 zu erreichen, über die Gasleckage-Vorhersagegleichung, wenn die Gaskonzentration Ct in der Küche als einen vorbestimmten unteren Grenzwert Ct0 erreichend detektiert wird (S420); und
Senden der Warnzeit t1 an den Benutzer (S430).

2. Verfahren zum Vorhersagen der Gaskonzentration basierend auf kollaborativer Filterung nach Anspruch 1, wobei das Berechnen der Ähnlichkeit in den Szenarioinformationen zwischen zwei Benutzern über den kollaborativen Filteralgorithmus konkret den folgenden Schritt umfasst:

Berechnen einer Ähnlichkeit w_uv gemäß Szenarioinformationssätzen N(u) und N(v) von zwei Benutzern u und v:

$$w_{\mu v} = \frac{\sum_{i \in N(u) \cap N(v)} \frac{1}{\log(1 + |N(i)|)}}{\sqrt{|N(u)||N(v)|}}$$

wobei N(i) sich auf einen Benutzersatz bezieht, dessen i-te Daten identisch sind unter den Szenarioinformationen der Mehrzahl von Benutzern.

3. Verfahren zum Vorhersagen der Gaskonzentration basierend auf kollaborativer Filterung nach Anspruch 2, wobei die Szenarioinformationen jedes Benutzers eine Region L, ein Gasleitungs-Material P, ein Küchenvolumen V und eine Gasinstallationszeit T aufweisen.

4. Verfahren zum Vorhersagen der Gaskonzentration basierend auf kollaborativer Filterung nach Anspruch 1, wobei das "Erfassen der Gasleckage-Vorhersagegleichung für den aktuellen Benutzer basierend auf den Gasleckage-Daten der historischen Benutzer in dem ersten Benutzersatz" konkret die folgenden Schritte umfasst:

Durchführen einer linearen Regression an den Gasleckage-Daten jedes historischen Benutzers in dem ersten Benutzersatz, und Erfassen einer linearen Regressionsgleichung für jeden historischen Benutzer (S310);
Unterteilen des ersten Benutzersatzes in eine Mehrzahl von zweiten Benutzersätzen gemäß Typen der linearen Regressionsgleichungen (S320); und

Auswählen der linearen Regressionsgleichung des historischen Benutzers, der sich in dem zweiten Benutzersatz mit einer größten Anzahl befindet und eine größte Ähnlichkeit zu dem aktuellen Benutzer aufweist, als die Gasleckage-Vorhersagegleichung für den aktuellen Benutzer (S330).

5. Verfahren zum Vorhersagen der Gaskonzentration basierend auf kollaborativer Filterung nach Anspruch 1, wobei das "Senden der Warnzeit t1 an den Benutzer" konkret die folgenden Schritte umfasst:

Berechnen eines Benutzers, der vorrangig alarmiert werden soll, basierend auf relevanten Informationen der Mehrzahl von Benutzern und unterschiedlichen Gewichtungen von unterschiedlichen relevanten Informationen, wobei die relevanten Informationen das Alter, die Rolle, die körperliche Fitness und eine Entfernung von der Küche des Benutzers aufweisen; und

Senden der Warnzeit t1 an den Benutzer, der vorrangig alarmiert werden soll.

6. Verfahren zum Vorhersagen der Gaskonzentration basierend auf kollaborativer Filterung nach Anspruch 1, wobei das Verfahren ferner die folgenden Schritte umfasst:

Senden eines Signals an eine Gasnotabschaltvorrichtung, um einen Gas-Hauptschalter auszuschalten, wenn die Gaskonzentration Ct als den Warnwert Ct1 erreichend detektiert wird, und Senden eines Aktivierungssignals an eine Lüftungsvorrichtung der Küche; und

Berechnen eines Benutzers, der vorrangig alarmiert werden soll, basierend auf relevanten Informationen der Mehrzahl von Benutzern und unterschiedlichen Gewichtungen von unterschiedlichen relevanten Informationen, und Senden einer Alarmmeldung an den Benutzer, der vorrangig alarmiert werden soll.

7. Verfahren zum Vorhersagen der Gaskonzentration basierend auf kollaborativer Filterung nach Anspruch 6, wobei das Verfahren ferner den folgenden Schritt umfasst:

Senden eines Alarms an den Benutzer, der vorrangig alarmiert werden soll, wenn die Gaskonzentration des Benutzers als weiterhin ansteigend detektiert wird, nachdem das Signal an die Gasnotabschaltvorrichtung gesendet wurde, um den Gas-Hauptschalter auszuschalten.

8. Elektronische Vorrichtung, die einen Speicher und einen Prozessor aufweist, wobei der Speicher ein Computerprogramm speichert, das auf dem Prozessor betrieben werden kann, und der Prozessor das Computerprogramm ausführt, um die Schritte in dem Verfahren zum Vorhersagen der Gaskonzentration basierend auf kollaborativer Filterung nach einem der Ansprüche 1 bis 7 zu implementieren.

9. Kühlschrank mit der elektronischen Vorrichtung nach Anspruch 8.

**Revendications**

1. Procédé de prédiction d'une concentration de gaz sur la base d'un filtrage collaboratif, comprenant :

l'acquisition d'informations de scénario lié au gaz d'une pluralité d'utilisateurs historiques présentant une fuite de gaz (S100) ;

l'acquisition d'informations de scénario d'un utilisateur actuel et le calcul d'une similarité des informations de scénario entre la pluralité d'utilisateurs historiques et l'utilisateur actuel via un algorithme de filtrage collaboratif (S200) ;

l'acquisition d'un premier ensemble d'utilisateurs en sélectionnant les utilisateurs historiques dont une similarité dépasse un seuil et l'acquisition d'une équation de prédiction de fuite de gaz pour l'utilisateur actuel sur la base de données de fuite de gaz des utilisateurs historiques dans le premier ensemble d'utilisateurs (S300) ; et

la prédiction d'une fuite de gaz de l'utilisateur actuel via l'équation de prédiction de fuite de gaz (S400) ;

la « prédiction de la fuite de gaz de l'utilisateur actuel via l'équation de prédiction de fuite de gaz » comprend spécifiquement :

l'acquisition d'une concentration de gaz Ct dans une cuisine de l'utilisateur actuel via un capteur de gaz (S410) ;

le calcul d'un temps d'avertissement t1 pour que la concentration de gaz atteigne une valeur d'avertissement Ct1 via l'équation de prédiction de fuite de gaz lorsqu'il est détecté que la concentration de gaz Ct dans la cuisine atteint une valeur limite inférieure prédéterminée Ct0 (S420) ; et
l'envoi du temps d'avertissement t1 à l'utilisateur (S430).

2. Procédé de prédiction de la concentration de gaz sur la base d'un filtrage collaboratif selon la revendication 1, dans lequel le calcul de la similarité des informations de scénario entre deux utilisateurs via l'algorithme de filtrage collaboratif comprend spécifiquement :

le calcul d'une similarité w_uv selon des ensembles d'informations de scénario N(u) et N(v) de deux utilisateurs u et v :

$$w_{uv} = \frac{\sum_{i \in N(u) \cap N(v)} \frac{1}{\log(1 + |N(i)|)}}{\sqrt{|N(u)||N(v)|}}$$

dans lequel N(i) fait référence à un ensemble d'utilisateurs dont les i-èmes données sont identiques parmi les informations de scénario de la pluralité d'utilisateurs.

3. Procédé de prédiction de la concentration de gaz sur la base d'un filtrage collaboratif selon la revendication 2, dans lequel
les informations de scénario de chaque utilisateur comprennent une région L, un matériau de conduite de gaz P, un volume de cuisine V et un temps d'installation de gaz T.

4. Procédé de prédiction de la concentration de gaz sur la base d'un filtrage collaboratif selon la revendication 1, dans lequel « l'acquisition de l'équation de prédiction de fuite de gaz pour l'utilisateur actuel sur la base des données de fuite de gaz des utilisateurs historiques dans le premier ensemble d'utilisateurs » comprend spécifiquement :

la réalisation d'une régression linéaire sur les données de fuite de gaz de chaque utilisateur historique dans le premier ensemble d'utilisateurs, et l'acquisition d'une équation de régression linéaire pour chaque utilisateur historique (S310) ;
la division du premier ensemble d'utilisateurs en une pluralité de seconds ensembles d'utilisateurs selon des types des équations de régression linéaire (S320) ; et
la sélection de l'équation de régression linéaire de l'utilisateur historique qui est dans le second ensemble d'utilisateurs présentant le plus grand nombre et présente la plus grande similarité avec l'utilisateur actuel comme équation de prédiction de fuite de gaz pour l'utilisateur actuel (S330).

5. Procédé de prédiction de la concentration de gaz sur la base d'un filtrage collaboratif selon la revendication 1, dans lequel « l'envoi du temps d'avertissement t1 à l'utilisateur » comprend spécifiquement :

le calcul d'un utilisateur à alerter de manière préférentielle sur la base d'informations pertinentes de la pluralité d'utilisateurs et de différents poids de différentes informations pertinentes, dans lequel les informations pertinentes comprennent l'âge, le rôle, la forme physique de l'utilisateur et une distance par rapport à la cuisine ; et
l'envoi du temps d'avertissement t1 à l'utilisateur à alerter de manière préférentielle.

6. Procédé de prédiction de la concentration de gaz sur la base d'un filtrage collaboratif selon la revendication 1, comprenant en outre :

l'envoi d'un signal à un dispositif d'arrêt d'urgence du gaz pour fermer un interrupteur principal du gaz lorsqu'il est détecté que la concentration de gaz Ct atteint la valeur d'avertissement Ct1 et l'envoi d'un signal d'activation à un dispositif de ventilation de la cuisine ; et
le calcul d'un utilisateur à alerter de manière préférentielle sur la base d'informations pertinentes de la pluralité d'utilisateurs et de différents poids de différentes informations pertinentes et l'envoi d'un message d'alerte à l'utilisateur à alerter de manière préférentielle.

7. Procédé de prédiction de la concentration de gaz sur la base d'un filtrage collaboratif selon la revendication 6, comprenant en outre :
l'envoi d'une alarme à l'utilisateur à alerter de manière préférentielle s'il est détecté que la concentration de gaz de l'utilisateur continue d'augmenter après que le signal a été envoyé au dispositif d'arrêt d'urgence du gaz pour fermer l'interrupteur principal du gaz.

8. Dispositif électronique, comprenant une mémoire et un processeur, dans lequel la mémoire stocke un programme informatique pouvant être exploité sur le processeur, et le processeur exécute le programme informatique pour mettre en œuvre les étapes du procédé de prédiction de la concentration de gaz sur la base d'un filtrage collaboratif selon l'une quelconque des revendications 1 à 7.

9. Réfrigérateur, comprenant le dispositif électronique selon la revendication 8.

Acquiring gas-related scenario information of a plurality of
historical users having a gas leakage

S100

Acquiring scenario information of a current user, and calculating
a similarity in the scenario information between the plurality of
historical users and the current user via a collaborative filtering
algorithm

S200

Acquiring a first user set by selecting the historical users whose
similarity exceeds a threshold, and acquiring a gas leakage
predicting equation for the current user based on gas leakage data
of the historical users in the first user set

S300

Predicting a gas leakage of the current user via the gas leakage
predicting equation

S400

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102184460 B